# EUROPEAN PATENT SPECIFICATION

(11) **EP 1 867 225 B1**
(45) Date of publication and mention of the grant of the patent: **17.01.2018**
(21) Application number: 07010930.1
(22) Date of filing: 02.06.2007
(51) Int. Cl.: A01B 59/06, A01B 63/108

(54) **Implement mounting device at the front of utility vehicles**
Frontgeräteanbauvorrichtung für Nutzfahrzeuge
Dispositif d'attelage frontal pour véhicules utilitaires

(30) Priority: 17.06.2006 GB 0612038
(43) Date of publication of application: 19.12.2007
(73) Proprietor: AGCO GmbH, 87616 Marktoberdorf (DE)
(72) Inventor: Kapfer, Johannes, 87616 Marktoberdorf (DE)
(74) Representative: Morrall, Roger

(56) References cited:
- EP-A- 1 269 816
- EP-A1- 1 529 426
- EP-B1- 0 630 179
- DE-C1- 4 129 034

## Description

The invention relates to an implement mounting device at the front of utility vehicles, in particular of agricultural tractors, with two liftarms, connected in a torsionally resistant way to the ends of a cross shaft which is pivotably mounted on the vehicle frame and which is rotatable by a piston and cylinder unit, the liftarms being offset laterally and having at their ends coupling hooks whose lateral spacing is variable for holding implements of various apparatus categories.

In the German Patent DE 41 29 034 C1 a hydraulic piston unit is described for attaching implements to the front of vehicles. In this prior art piston unit the liftarms are connected by cross shafts which enter a tubular rocker shaft running transversely to the vehicle's lengthwise direction. The cross shafts are inserted laterally into the tubular rocker shaft and secured by means of a positively acting locking device in the desired working position of the liftarms. Each shaft cross is locked by a pin mounted radially on the tubular rocker shaft, which engages in a groove of the cross shafts and lies against an end region of the groove. By moving and locking the cross shaft into suitable insertion positions in the rocker shaft the coupling hooks arranged on the ends of the liftarms can be adjusted for holding implements of various categories. This prior art arrangement has the disadvantage of high manufacturing costs, which are linked with the production of the tubular rocker shaft and the liftarms. The torque exerted on the liftarms by an attached implement is also transferred by non-positive action to the tubular rocker shaft. Therefore, the tubular rocker shaft must be very robustly constructed, in particular for vehicles which are able to carry heavy implements, with relatively wide outside diameter, whereby substantial manufacturing costs result. Furthermore, in the case of the prior art attachment device high subjection to wear has to be taken into account. Therefore, the cross shafts must be mounted with a relatively large degree of play in the tubular rocker shaft, if it is going to be possible to manually adjust the liftarms in a simple way. Due to the large degree of play impact forces arising during the use of heavy implements lead to relative movements of the components involved, which are thereby subject to high wear. The same applies to the locking device, whose pin, pin mounting and groove are exposed to such substantial impact forces.

Further examples of known implement mounting devices are found in European Patent Publication Numbers EP1269816 and EP1529426.

On this basis the objective of the invention consists in creating an implement mounting device of the type described initially, whose components do not require any expensive machining and are not subject to significant wear.

Thus according to the present invention there is provided an implement mounting device as claimed in claim 1 for the front of a utility vehicle such as an agricultural tractor. The device comprising two transversely spaced lift arms having coupling hooks at their outer ends and being connected at their inner ends to a cross shaft which is pivotally mounted on a frame of the vehicle and is rotatable vertically relative to the frame by a piston and cylinder assembly, the coupling hook of each lift arm being laterally offset relative to the inner end of the lift arm and the lateral spacing between the coupling hooks being variable for holding implement of various size categories, the device being characterised in that the lift arms are interchangeable mounted on the cross shaft so that each lift arm can be moved from a first position adjacent one end of the cross shaft in which it is mounted with its coupling hook offset axially inward of its inner end to a second position adjacent the other end of the cross shaft with its coupling hook offset axially outwardly of its inner end, thus providing two different axial distances between the coupling hooks to accommodate two different sizes of implement.

Further advantageous details of the invention will be evident from the sub-claims. Due to the inventive measures the liftarms can be adjusted to two apparatus categories in a simple way. For this purpose, it is only necessary to interchange both liftarms between their first and second positions. Cost-incurring machining stages are not required for the production of the piston and cyliner unit.

A technically particularly simple solution for securing the liftarms to the cross shaft is indicated in claim 2. The further feature of the invention according to Claim 5 allows the liftarms to be swung upwards when not in use so that they do not project to the front in a way dangerous to traffic, and to be simply detached from the cross shaft, if changeover of the implement mounting device to the other adjustable apparatus category is intended. If an implement is to be attached, the liftarms can be easily pivoted down from their raised position, whereby the extensions of claim 4 bear against the underside of the cross shaft which thus acts as a buffer and which marks the normal working position of the liftarms. Here, it is expedient to configure the extensions of the liftarms of Claim 4, so that the wear on the surfaces contacting one another is thus kept to a minimum.

By constructing each end piece as a double-armed lever with one arm supporting the lift arm and the other arm being connected with the piston and cylinder unit the manufacturing costs can be minimised.

One embodiment of the invention will now be described below with reference to the following drawings in which:-
- Fig. 1:: is a view of the implement mounting device from above and
- Fig. 2:: is a perspective view of the implement mounting device.

The implement mounting device according to the invention comprises a piston and cylinder unit 1, as well as two liftarms 2, 3, pivotably mounted on the front frame of a tractor - not illustrated.

The piston and cylinder unit 1 consists of a lifting cross shaft 1a extending transversely to the vehicle lengthwise direction L on which two pivot bearings 1b are secured by split pins lc. The unit 1 is pivotally mounted on the vehicle via bearings 1b. At both ends regions of the cross shaft 1a a double-armed end piece 1d is permanently attached. A lifting cylinder 4 mounted on the vehicle frame is attached to each upwardly extending arm 1e of the end piece 1d for pivoting the mounting device in a vertical sense about bearing 1b.

An arm 1f of each end piece 1d extends to the front in the vehicle lengthwise direction L and is provided with an inner attachment point 1g and, at the distance A therefrom, with an outer attachment point 1h for the associated liftarm 2, 3. The distance A in this case corresponds to the width of the end pieces 1d. Furthermore, the end pieces 1d are drilled with a hole running transversely to the vehicle lengthwise direction L, which seats a locking pin 5 for detachably securing the liftarms 2, 3 to the end pieces 1d.

The liftarms 2, 3 are laterally offset in the known way and at their front ends are provided with coupling hooks 6, which serve to hold implements. For attachment to the end pieces 1d each liftarm 2, 3 has a drilled hole, which seats the locking pin 5 near the vehicle-side end region. Depending on whether the implement mounting device is to be used to hold apparatus of a larger category or a smaller category, the liftarms 2, 3 are attached and secured either to the inner 1h and/or the outer 1g attachment point of the end pieces 1d. For this purpose, the liftarm 2, 3 is mounted on the locking pin 5 and, by means not shown, is laterally fixed in such a manner that it can still be pivoted in a vertical plane. Extensions 2a, 3a of the liftarms 2, 3 thereby pass under the lifting shaft 1a, where under the load of an attached implement they lie against its lower side and prevent the liftarms 2, 3 from falling downwards. A further removable locking pin 7 is present, which prevents uncontrolled swaying during driving over uneven surfaces when the apparatus is in the working position, however after its removal for driving without attachments permits the liftarms 2, 3 to be pivoted upwards on the pins 5 to a non-use stored position.

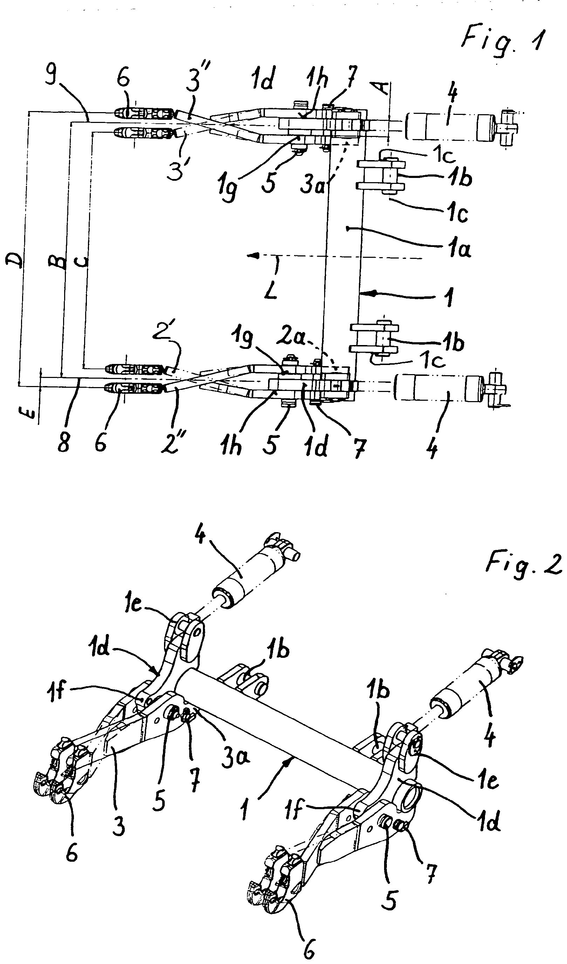

For adjusting the coupling hooks 6 to a lateral distance, which corresponds to the smaller apparatus category, the liftarm 2 with the offset pointing inwards is secured in position 2', shown in Figure 1 to the outer attachment point 1h of the right vehicle side (viewed pointing forwardly) and the liftarm 3 with the hook offset pointing inwards is secured to the outer attachment point 1h of the left vehicle side in position 3'. Accordingly, in order to adjust the coupling hooks 6 to a lateral distance, which corresponds to the larger apparatus category the liftarms are interchanged, the liftarm 2 with the hook offset pointing outwards is secured to the inner attachment point 1g of the left vehicle side and the liftarm 3 with offset pointing outwards is secured to the inner attachment point 1g of the right vehicle side as shown in positions 2" and 3" in Figure 1.

So that the coupling hooks 6, after the implement mounting device has been adjusted to one of the apparatus categories, take up the prescribed lateral distances, both the inner attachment point 1g and the outer attachment point 1h for the liftarms 2, 3 on the left vehicle side are at a distance A/2 from a first crossover plane 8 and the inner attachment point 1g and the outer attachment point 1h for the liftarms 2, 3 on the right vehicle side are at a distance A/2 from a second crossover plane 9, whereby the distance B between the crossover planes 8, 9 corresponds to the middle distance between the coupling hooks 6 for the various apparatus categories.

The distance A of the attachment points 1g, 1h and thereby the width of the end pieces 1d are dependent on the amount of the offset of the liftarms 2, 3 and are to be selected so that the coupling member 6 of the liftarm 2, 3 cooperating with the inner attachment point 1g and the coupling member 6 of the liftarm 2, 3 cooperating with the outer attachment point 1h are positioned at a distance E apart, which corresponds to a quarter of the difference of the distances D and C of the coupling hooks 6 of both apparatus categories.

On the basis of an implement mounting device, whose coupling member 6 is adjusted to the larger apparatus category at a distance D apart, in order to adjust the implement mounting device to the smaller category, whereby the coupling hooks 6 have a distance C apart, both liftarms 2, 3 are transposed, that is to say the previously right liftarm 3 is moved onto the left outer attachment point 1h and the previously left liftarm 2 is moved onto the right outer attachment point 1h. For releasing the liftarms 2, 3 to be transposed the locking pins 5 are removed at both ends and re-fitted after their position has been changed.

## Claims

1. An implement mounting device for the front of a utility vehicle such as an agricultural tractor, the device having the two transversely spaced lift arms (2,3) having coupling hooks (6) at their outer ends and being connected at their inner ends to a cross shaft (1a) which is pivotally mounted on a frame of the vehicle and is rotatable vertically relative to the frame by a piston and cylinder assembly (4), the coupling hook of each lift arm being laterally offset relative to the inner end of the lift arm and the lateral spacing between the coupling hooks being variable for holding implement of various size categories, the device being wherein the lift arms (2,3) are interchangeable mounted on the cross shaft (1a) so that each lift arm can be moved from a first position (2',3') adjacent one end of the cross shaft in which it is mounted with its coupling hook (6) offset axially inward of its inner end to a second position (2",3") adjacent the other end of the cross shaft with its coupling hook offset axially outwardly of its inner end, thus providing two different axial distances (C,D) between the coupling hooks to accommodate two different sizes of implement, **characterised in that** the cross shaft (1a) has axially outer (1h) and axially inner (1g) attachment points adjacent each end thereof, the lift arms (2,3) being attached to the axially outer mounting points wherein their first positions (2',3') and to the axially inner mounting points when in their second position (2",3").

2. A device according to claim 1 **characterised in that** the distance (A) between the outer and inner mounting points at each end of the cross shaft (1a) is selected as a function of the amount of the off set of the hooks (6)on the lift arms (2,3).

3. A device according to claim 1 or 2 **characterised in that** axially outer (1h) and axially inner (1g) attachment points adjacent each end of the cross shaft (1a) are provided on opposite sides of end pieces (1d) attached to the cross shaft.

4. A device according to claim 3 **characterised in that** each end piece (1d) has a first arm (1f) to which the associated lift arm (2,3) is connected by a locking pin (5), the inner end of the liftarm having an extension (2a,3a) which bears against the underside of the cross shaft (1a).

5. A device according to claim 4 **characterised in that** each lift arm is connected with the arm of the associated end piece (1d) by a second pin (7) which prevents pivoting of the lift arm about the first pin (5) when the device is in use, the lift arm (2,3) being pivotable about the first pin (5) to a raised stored position.

6. A device according to any one of claims 3 to 5 **characterised in that** the piston and cylinder assembly (4) is connected to a further arm (1e) on each end pieces (1d).

## Patentansprüche

1. Geräteanbauvorrichtung für die Front eines Nutzfahrzeugs, wie beispielsweise eines landwirtschaftlichen Traktors, wobei die Vorrichtung zwei in Querrichtung beabstandete Liftarme (2, 3) aufweist, die an ihren äußeren Enden Kopplungshaken (6) aufweisen und an ihren inneren Enden mit einer Querwelle (1a) verbunden sind, die schwenkbar an einem Rahmen des Fahrzeugs montiert und mittels einer Kolben-Zylinder-Einheit (4) relativ zu dem Rahmen vertikal drehbar ist, wobei der Kopplungshaken jedes Arms seitlich versetzt zu dem inneren Ende des Liftarms und der seitliche Abstand zwischen den Kopplungshaken variabel ist, um Anbaugeräte verschiedener Größenkategorien aufnehmen zu können, wobei die Liftarme (2, 3) austauschbar an der Querwelle (1a) montiert sind, so dass jeder Liftarm von einer ersten Position (2', 3') in eine zweite Position (2", 3") bewegt werden kann, wobei er in der ersten Position (2', 3') benachbart zu einem Ende der Querwelle und mit seinem Kopplungshaken (6) axial nach innen versetzt zu seinem inneren Ende ist, und wobei er in der zweiten Position (2", 3") benachbart zu dem anderen Ende der Querwelle und mit seinem Kopplungshaken (6) axial nach außen versetzt zu seinem inneren Ende ist, wodurch zwei unterschiedliche axiale Abstände (C, D) zwischen den Kopplungshaken bereitgestellt werden, um zwei verschiedene Größen von Anbaugeräten aufzunehmen, **dadurch gekennzeichnet, dass** die Querwelle (1a) axial äußere Befestigungspunkte (1h) und axial innere Befestigungspunkte (1g) benachbart zu jedem ihrer Enden aufweist, wobei die Liftarme (2, 3) in ihrer ersten Position (2', 3') an den axial äußeren Montagepunkten und in ihrer zweiten Position (2", 3") an den axial inneren Montagepunkten befestigt sind.

2. Vorrichtung nach Anspruch 1, **dadurch gekennzeichnet, dass** der Abstand (A) zwischen den äußeren und inneren Montagepunkten an jedem Ende der Querwelle (1a) als eine Funktion der Größe des Versatzes der Haken (6) an den Liftarmen (2, 3) gewählt ist.

3. Vorrichtung nach Anspruch 1 oder 2, **dadurch gekennzeichnet, dass** axial äußere Befestigungspunkte (1a) und axial innere Befestigungspunkte auf (1b) benachbart zu jedem Ende der Querwelle (1a) an entgegengesetzten Seiten des an der Querwelle befestigten Endstücks (1d) bereitgestellt sind.

4. Vorrichtung nach Anspruch 3, **dadurch gekennzeichnet, dass** jedes Endstück (1d) einen ersten Arm (1f) aufweist, an dem der zugeordnete Liftarm (2, 3) durch einen Sicherungsstift (5) befestigt ist, wobei das innere Ende des Liftarms einen Fortsatz (2a, 3a) aufweist, der sich an der Unterseite der Querwelle (1a) abstützt.

5. Vorrichtung nach Anspruch 4, **dadurch gekennzeichnet, dass** jeder Liftarm durch einen zweiten Stift (7) mit dem Arm des zugeordneten Endstücks (1d) verbunden ist, wobei der zweite Stift (7) ein Verschwenken des Liftarms um den ersten Stift (5) verhindert, wenn die Vorrichtung benutzt wird, wobei der Liftarm (2, 3) zum Erreichen einer angehobenen gespeicherten Position um den ersten Stift (5) verschwenkbar ist.

6. Vorrichtung nach einem der Ansprüche 3 bis 5, **dadurch gekennzeichnet, dass** die Kolben-Zylinder-Einheit (4) mit einem weiteren Arm (1c) an jedem Endstück (1d) verbunden ist.

## Revendications

1. Dispositif de montage d'outillage à l'avant d'un véhicule utilitaire tel un tracteur agricole, le dispositif comportant deux bras de levage espacés transversalement (2, 3) comportant des crochets de couplage (6) à leur extrémité externe et étant couplés à leur extrémité interne à un arbre transversal (1a) monté de manière à pouvoir pivoter sur un bâti du véhicule et pouvant être amené à tourner dans le sens vertical relativement au bâti par un ensemble à piston et cylindre (4), le crochet de couplage de chaque bras de levage étant décalé latéralement par rapport à l'extrémité interne du bras de levage et l'espacement latéral entre les crochets de couplage étant variable afin de maintenir des catégories d'outillage de différentes tailles, le dispositif se situant là où les bras de levage (2, 3) sont montés de manière interchangeable sur l'arbre transversal (1a) de telle sorte que chaque bras de levage peut être déplacé d'une première position (2', 3') voisine d'une extrémité de l'arbre transversal dans laquelle il est monté avec son crochet de couplage (6) décalé axialement vers l'intérieur de son extrémité interne, vers une seconde position (2", 3") voisine de l'autre extrémité de l'arbre transversal avec son crochet de couplage décalé axialement vers l'extérieur de son extrémité interne, présentant ainsi deux distances axiales différentes (C, D) entre les crochets de couplage afin de recevoir deux tailles d'outillage différentes, **caractérisé en ce que** l'arbre transversal (1a) comporte des points de fixation axialement externe (1h) et axialement interne (1g) adjacents à chaque extrémité de celui-ci, les bras de levage (2, 3) étant fixés sur les points de montage axialement externes dans leurs premières positions (2', 3') et sur les points de montage axialement internes lorsqu'ils sont dans la seconde position (2", 3").

2. Dispositif selon la revendication 1, **caractérisé en ce que** la distance (A) entre les points de montage externe et interne au niveau de chaque extrémité de l'arbre transversal (1a) est sélectionnée en fonction de la valeur du décalage des crochets (6) sur les bras de levage (2, 3).

3. Dispositif selon la revendication 1 ou 2, **caractérisé en ce que** des points de fixation axialement externe (1h) et axialement interne (1g) voisins de chaque extrémité de l'arbre transversal (1a) sont formés sur des côtés opposés de pièces d'extrémité (1d) fixées sur l'arbre transversal.

4. Dispositif selon la revendication 3, **caractérisé en ce que** chaque pièce d'extrémité (1d) comporte un premier bras (1f) sur lequel le bras de levage associé (2, 3) est relié par une broche de verrouillage (5), l'extrémité interne du bras de levage comportant une extension (2a, 3a) qui porte contre la face inférieure de l'arbre transversal (1a).

5. Dispositif selon la revendication 4, **caractérisé en ce que** chaque bras de levage est relié au bras de la pièce d'extrémité associée (1d) par une seconde broche (7) qui empêche le pivotement du bras de levage autour de la première broche (5) lorsque le dispositif est en utilisation, le bras de levage (2, 3) pouvant pivoter autour de la première broche (5) vers une position de stockage surélevée.

6. Dispositif selon l'une quelconque des revendications 3 à 5, **caractérisé en ce que** l'ensemble à piston et cylindre (4) est relié à un autre bras (le) sur chacune des pièces d'extrémité (1d).
